# EUROPÄISCHE PATENTSCHRIFT

(11) **EP 1 810 868 B1**
(45) Veröffentlichungstag und Bekanntmachung des Hinweises auf die Patenterteilung: **22.06.2011**
(21) Anmeldenummer: 06026020.5
(22) Anmeldetag: 15.12.2006
(51) Int. Cl.: B60L 5/40, B60M 1/30

(54) **Fördersystem**
Conveying system
Système d'alimentation

(30) Priorität: 18.01.2006 DE 102006002283
(43) Veröffentlichungstag der Anmeldung: 25.07.2007
(73) Patentinhaber: Sickert & Hafner GmbH Automotive Systems, 63628 Bad Soden-Salmünster (DE)
(72) Erfinder: Sickert, Sigurd, 63628 Bad Soden-Salmünster (DE)
(74) Vertreter: Behrens, Helmut

(56) Entgegenhaltungen:
- EP-A- 0 524 084
- DE-U1- 9 302 336
- FR-A1- 2 759 329

## Beschreibung

Die Erfindung betrifft ein Fördersystem gemäß dem Oberbegriff des Patentanspruchs 1.

Derartige Fördersysteme werden vorzugsweise in der Fertigungsindustrie eingesetzt, um Fertigungsteile oder Fertigungsgeräte zu den oft hintereinander angeordneten Arbeitsplätzen zu befördern. Dabei bestehen derartige Fördersysteme meist aus mehreren Laufwagen oder Fördergutträgern, die in einer Schiene hängend oder stehend laufen und die die Arbeitsplätze in der Serienfertigung nacheinander oder auf einer Förderstrecke kontinuierlich anfahren. Für die unterschiedlichsten Anforderungen sind verschiedene Fördersysteme bekannt, die jeweils bestimmte Vor- und Nachteile aufweisen.

Ein Fördersystem in Form einer Hängefördereinrichtung ist aus der EP 1 123 850 A2 bekannt. Diese Hängefördereinrichtung besteht im Wesentlichen aus einer Laufschiene und mehreren daran aufgehängten Laufwagen, die das Fördergut entlang einer Förderstrecke bewegen. Die Laufschiene besteht aus einem Längsprofil, das zwei Seitenwände aufweist, die durch vier Querwände miteinander verbunden sind, so dass innerhalb der Laufschiene drei lang gestreckte Hohlräume gebildet werden. Die Laufschiene besitzt oben an ihrem Aufhängebereich einen V-förmigen Querschnitt und unten zwei seitlich auskragende Laufflächen, die das Profil eines Satteldaches bilden. Die Laufschiene ist vertikal aufgehängt und zur Führung von hängenden Laufwagen oder Fördergutträgern vorgesehen. Die Laufwagen bzw. Fördergutträger besitzen oben einen Laufwerkskopf, der zwei Laufwerke mit vier Laufrollen enthält, die an zwei V-förmigen Bügeln befestigt sind. Dabei umgreifen die Bügel die schräg auskragenden Laufflächen der Laufschiene, damit die beiden komplementären Laufrollen eines Laufwerkes senkrecht auf den Laufflächen aufliegen und auf diesen rollend bewegbar sind. Zwei derartige Laufwerke sind unterhalb der Bügel mit einer Tragstange verbunden und bilden einen Laufwagenkopf, an dem die Laufwagen, die Fördergutträger oder eine andere Last direkt befestigt wird.

Seitlich neben dem Laufwagenkopf unterhalb der Laufschiene ist als Antriebsmittel eine Antriebskette in einer Kettenführung parallel zur Förderstrecke angeordnet und separat aufgehängt. An der Förderkette sind dabei seitlich abstehende Bürstenelemente befestigt, die in am Laufwagenkopf angeordnete Ankoppelelemente eingreifen und den Laufwagen in Transportrichtung mitnehmen. Die Ankoppelelemente sind dabei nach oben schwenkbar angeordnet, so dass beim Auflaufen auf einen anderen Laufwagen sich beide Ankoppelelemente nach oben verschwenken und dadurch die Bürstenelemente freigeben, so dass die Laufwagen antriebslos stehen bleiben und die Kette ungehindert weiter läuft. Die Antriebskette ist umlaufend zu einem Antriebszahnrad angeordnet und bildet offensichtlich eine Endlosschleife für ein Kreisfördersystem, bei dem eine Antriebskette in einem geschlossenen Schienenkreis die Laufwagen befördert. Soll ein derartiges Kreisfördersystem beispielsweise wegen fehlenden Bauraum oder aus anderen Gründen als Streckenfördersystem ausgestaltet werden, bei dem die Laufwagen nur zwischen einem Anfangs- und einem Endpunkt bewegt werden, so muss zusätzlich noch eine zweite Führungsschiene vorgesehen werden, in der die Endloskette zurücklaufen kann. Dazu ist nicht nur eine neue Kettenführung notwendig, sondern auch ein zusätzlicher Bauraum für die weitere Kettenführung erforderlich.

Ein Fördersystem, dass sowohl als Strecken- und auch als Kreisfördersystem geeignet ist, stellt der bereits aus der DE 195 28 922 A1 bekannte Paletten- und Stauförderer dar. Dieser Paletten- und Stauförderer besitzt ein einheitliches Schienensystem, das sowohl Förderstrecken ermöglicht, die als Streckenfördersystem übereinander und als Kreisfördersystem nebeneinander angeordnet sind. Dazu ist eine Laufschiene vorgesehen, die aus Leichtmetall-Profilabschnitten besteht, die über zwei seitlich offene Nuten verfügt, in dem die Palettenrollen geführt sind. Zwischen diesen beiden Nuten ist eine in Schienenlängsrichtung angeordnete, nach oben offene weitere Längsnut vorgesehen, in der eine Kettenführung eingelegt ist und in der eine Antriebskette endlos umläuft.

Diese Laufschienen sind horizontal angeordnet und im Wesentlichen für eine stehende Förderung der Fördergutträger, die als Paletten ausgebildet sind, vorgesehen. Die Paletten stellen im Grunde einen Laufwagen dar, dessen Kopfteil einen Rahmenteil enthält, der die Laufschiene umgreift und an dem die in den Nuten umlaufenden Laufrollen angeordnet sind. Zum Antrieb der Paletten ist in dem Kopfteil ein Kettenrad als Antriebsritzel integriert, das durch Federkraft in die umlaufende Antriebskette der Laufschiene eingreift. Dieses Antriebsritzel ist über eine Rutschkupplung schwergängig drehbar gelagert, so dass die Antriebskette die Palette bzw. den Laufwagen in Förderrichtung mitnimmt. Stossen allerdings zwei Paletten aneinander, so wird die auffahrende Palette durch die Rutschkupplung stillgesetzt oder abgebremst.

Bei einer ersten Ausführung dieses Schienensystems sind zwei Laufschienen übereinander angeordnet und mittels zweier Umlenkbögen miteinander verbunden, in dem Umlenkkettenräder vorgesehen sind, durch die die Antriebskette umlaufend angetrieben wird. In diesem als Streckenfördersystem angeordneten Paletten-Stauförderer werden die Paletten stehend entlang der Förderstrecke bewegt und hängend wieder zum Anfangsort zurückgefördert. Dieses Laufschienensystem wird bei einer anderen Ausführung auch nebeneinander liegend angeordnet und durch zwei Umlenkbögen horizontal miteinander verbunden. Hierbei handelt es sich dann um einen Kreisfördersystem, bei dem dann allerdings die Laufschienen und die Paletten senkrecht angeordnet sind. Bei einer weiteren Ausführung sind die Laufschienen auch nebeneinander aber horizontal angeordnet, wobei dann die Paletten wieder horizontal stehend transportiert werden. Dazu sind dann allerdings besondere Profilabschnitte als Umlenkbögen notwendig, die dann offensichtlich sehr große Umlenkradien erfordern, um die Paletten sicher führen zu können. Dieses Schienensystem gestattet durch die Rutschkupplung zwar ein Staufördersystem, aber keine individuelle Fördergeschwindigkeit der einzelnen Laufwagen oder Paletten.

Ein Fördersystem mit eigenem separaten Antrieb für jeden Laufwagen ist aus der DE 295 09 605 U1 bekannt, in der eine Elektrohängebahn zur Beförderung von Lasten offenbart ist. Dabei besteht die Elektrohängebahn aus einer Laufschiene, an der mehrere Laufwagen geführt sind. Die Laufschiene ist als Doppel-T-Profil ausgebildet und vertikal angeordnet, so dass die obere horizontale T-Schenkelfläche als Lauffläche des Laufwagens dient. Die Laufwagen enthalten ein Kopfteil mit einem die Schiene umgreifenden Bügel, an dem ein Antriebsrad als Reibrad gelagert ist, dass mit seiner Mantelfläche auf der Lauffläche der Schiene aufliegt. Das Antriebsrad wird über ein Getriebe von einem Elektromotor angetrieben und bewegt den Laufwagen entlang der Schiene. Durch eine Motorsteuerung kann der Laufwagen entlang der Förderstrecke beliebig verfahren werden.

Allerdings ist für die Überwindung von Gefällstrecken neben der Laufschiene noch eine weitere Führungsschiene mit einer Bremskette angebracht, an der Mitnehmerklinken vorgesehen sind, in die ein am Laufwagen angebrachter Bolzen eingreift. Die Bremskette ist noch mit einer Fliehkraftkupplung verbunden, durch die der Laufwagen in seiner Abfahrtgeschwindigkeit begrenzt wird. Zur Überwindung von größeren Steigungen sind oberhalb des Reibrades noch zwei Kettenräder als Antriebsritzel vorgesehen, die wie bei einer Zahnradbahn in eine weitere stationäre Kette eingreifen. Dazu muss oberhalb der Laufschiene mindestens im Bereich der Steigungen noch eine weitere Schiene zur Aufnahme der stationären Kette vorgesehen werden. Ein derartiges Fördersystem einer Elektrohängebahn mit teilweise drei nebeneinander angeordneten separaten Schienensystemen ist sehr aufwendig und für Strecken- oder Kreisfördersysteme mit Kettenantrieb nicht verwendbar.

Aus der EP 524 084 A1 ist bereits ein Fördersystem als Elektrohängebahn bekannt, das eine Laufschiene enthält, an der ein Laufwagenkopf angeordnet ist, der durch einen Elektromotor angetrieben wird. Dabei besteht die Laufschiene aus einem Längsprofil, das in seinem Zentrum ein rechteckiges lineares Rohrteil aufweist, an dessen Seitenwänden zusätzliche Hohlprofile und Stege mit dazwischenliegenden Schlitzen angefügt sind. Im unteren Laufschienenabschnitt sind insbesondere zwei nach aussen kragende und gegenüberliegende horizontale Stege angeordnet, auf der die Laufrollen des Laufwagenkopfes geführt werden und diese nach unten abstützen. Oberhalb dieser Laufflächenstege sind an der Laufschiene mehreckige Hohlprofile angeordnet, zwischen denen an jeder gegenüberliegenden Seite zwei Längsschlitze vorgesehen sind, an deren vertikaler Rückwand elektrisch leitende Schleifkontaktbänder befestigt sind, die zur Stromversorgung des Antriebsmotors am Laufwagenkopf dienen. Bei einer Ausführung des bekannten Fördersystems ist an der Laufschiene ein Laufwagenkopf vorgesehen, der aus einem dreiteilige Rahmenteil besteht, wobei jeder Rahmenteil als lineares Hohlprofilteil ausgebildet ist. Dabei erstrecken sich die beiden seitlichen Hohlprofilteile vertikal nach oben über das mittlere Hohlprofilteil und bilden dadurch eine mittlere Längskammer, in die die Laufschiene hineinragt und den Laufwagenkopf führt. An den Innenwänden der seitlichen Hohlprofile sind im unteren Bereich der mittleren Längskammer gegenüberliegend die zwei Laufrollen gelagert, die auf den auskragenden Laufflächen der Laufschiene geführt werden und sich darauf abstützen. Am oberen Bereich der beiden seitlichen Hohlprofile sind jeweils zwei Polkontaktstifte angebracht, die in die beiden seitlichen Längsschlitze der Laufschiene ragen und auf den Schleifkontaktbändern elektrisch leitend geführt werden. Dabei sind die Polkontaktstifte innerhalb der seitlichen Hohlprofile verdrahtet und offensichtlich mit dem Antriebsmotor oder dessen Steuerung verbunden. Durch die sowohl in der Laufschiene als auch in dem Laufwagenkopf integrierten elektrischen Antriebs- und Ankoppelelemente ist damit ein Fördersystem mit anderen Antriebs- oder Förderkonzepten nicht realisierbar.

Der Erfindung liegt deshalb die Aufgabe zugrunde, ein Fördersystem zu schaffen, mit dessen Systemkomponenten eine Vielzahl unterschiedlicher Fördersysteme aufbaubar ist und die mit möglichst wenig verschiedenen Bauteilen oder Baugruppen realisiert werden können.

Diese Aufgabe wird durch die in Patentanspruch 1 angegebene Erfindung gelöst. Weiterbildung und vorteilhafte Ausführungsbeispiele sind in den Unteransprüchen angegeben.

Die Erfindung hat den Vorteil, dass durch die Systemschiene mit dem komplementären Laufwagenkopf lediglich durch integrierbare Zusatzteile oder Baugruppen auf einfache Art und Weise Streckenfördersysteme oder Kreisfördersysteme gleichermaßen realisierbar sind und dies sowohl als Schwerkraftfördersysteme, als Kettenantriebssysteme und auch als Elektrobahnsysteme und die gleichzeitig auch als Staufördersysteme ausführbar sind. Dabei besitzt die Erfindung auch den Vorteil, dass durch die nachträgliche Integrierung vorgesehener Zusatzteile oder Baugruppen die jeweiligen Fördersysteme erweiterbar oder nahezu beliebig mit einander kombinierbar sind, ohne dass die einzelnen Systemkomponenten wie Laufschiene und Laufwagenkopf nennenswert verändert werden müssen.

Dabei besitzt die Erfindung durch die Systemschiene insbesondere den Vorteil, dass darin verschiedene Antriebsysteme wie Kettenantriebskomponenten oder Zahnradantriebskomponenten für Elektrobahnsysteme integrierbar sind, ohne zusätzliche Schienen-, Führungs- oder Mitnehmersysteme außerhalb der Laufschiene installieren zu müssen.

Die Erfindung besitzt darüber hinaus durch die Schaffung eines komplementären Laufwagenkopfes den Vorteil, dass durch den Einsatz eines universell verwendbaren Längsprofilträgers in diesen unterschiedliche Kopfkomponenten integrierbar sind. Dadurch ist dieser Laufwagenkopf für unterschiedliche Antriebssysteme, wie Kettenantriebe, Elektrowagenantriebe oder Schwerkraftantriebe geeignet und dies lediglich durch Ergänzung einzelner Kopfkomponenten und kann gleichzeitig auf der für alle Fördersysteme verwendbaren Laufschiene eingesetzt werden.

Die Erfindung weist darüber hinaus noch den Vorteil auf, dass dieses erfindungsgemäße Fördersystem sowohl als Hängebahnsystem als auch für schienengebundene Flurfördersysteme mit stehenden Laufwagen oder Fördergutträgern geeignet ist. Dabei ist es bei beiden Fördersystemvarianten vorteilhaft, dass durch die Integration der Systemkomponenten in die Systemschiene und/oder den Längsprofilträger die unterschiedlichen Fördersysteme mit einem Minimum an Bauraum für eine Einzellaufschiene und den Laufwagenkopf auskommen und dies auch bei größeren Steigungs- oder Gefällstrecken.

Die Erfindung wird anhand eines Ausführungsbeispiels, das in der Zeichnung dargestellt ist, näher erläutert. Es zeigen:
Fig. 1: eine Vorder- und Seitenansicht eines Ausschnitts aus einem Streckenfördersystem mit zwei Einrollen-Laufwagenköpfen und einem Systemschienenabschnitt;
Fig. 2: ein Schnittbild des Querschnitts einer Systemlaufschiene;
Fig. 3: ein Schnittbild des Querschnitts einer Profilhälfte eines Längsprofilträgers für einen Laufwagenkopf;
Fig. 4: ein schematisch dargestelltes Streckenfördersystem mit separater Rückfahrstrecke;
Fig. 5: eine Drauf- und Seitenansicht eines Doppelrollen-Laufwagenkopfes für ein Elektrohängebahnsystem und
Figur 6: ein Ausschnitt eines Elektrohängebahnsystems mit zwei Doppelrollen-Laufwagenköpfen.

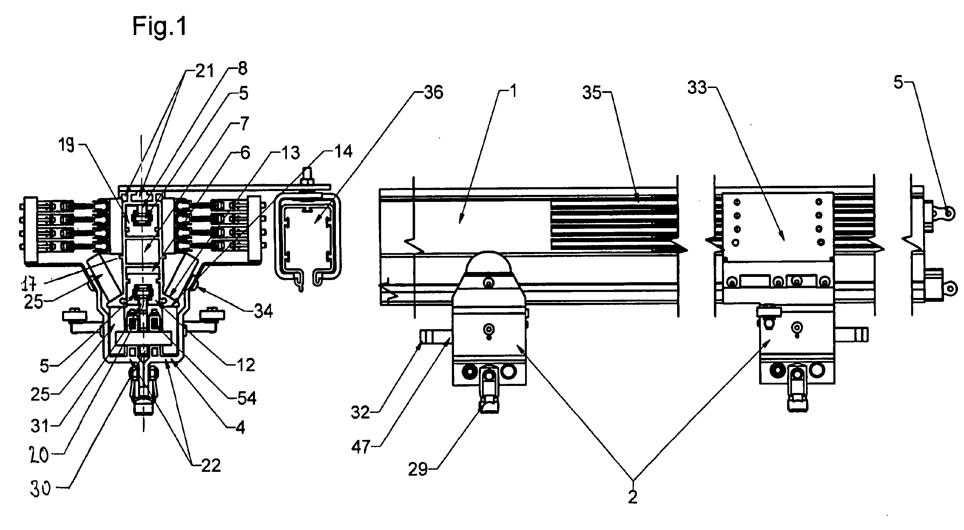

In Fig. 1 der Zeichnung ist in einer Vorder- und Seitenansicht ein Ausschnitt eines erfindungsgemäßen Fördersystems dargestellt, das als Streckenfördersystem ausgebildet ist und das aus einer Laufschiene 1 als Systemschiene besteht, in der eine umlaufende Antriebskette 5 integriert ist, die zwei anhängende Laufwagenköpfe 2 aus einem Längsprofilträger 4 auf den Laufflächen 13 der Systemschiene 1 befördert.

Die Erfindung besteht im wesentlichen aus einer besonders ausgebildeten Laufschiene 1 als Systemschiene in Kombination mit einem universellen komplementären Laufwagenkopf 2 mit der alle derzeit gebräuchlichen Fördersysteme (Strecken-, Kreis-, Schwerkraft-, Stauwagen- und Elektrobahn-Fördersysteme) aufbaubar sind, wobei alle zusätzlich notwendigen Systemkomponenten in diese Systemschiene 1 und/oder in den Laufwagenkopf 2 integrierbar sind. Deshalb ist in die Systemschiene 1 für das dargestellte Streckenfördersystem mit Kettenantrieb eine umlaufende Antriebskette 5 integriert, die die beiden dargestellten Laufwagenköpfe 2 antreibt, an die ein größerer oder zwei kleinere Laufwagen als Fördergutträger anhängbar sind. Denn ein Streckenfördersystem ist dadurch gekennzeichnet, dass es die Laufwagen 38 oder Fördergutträger vorzugsweise linear zwischen einem Anfangs- und einem Endpunkt einer Förderstrecke 37 befördert, wie dies häufig bei einer industriellen Fließfertigung notwendig ist. Dabei können die Laufwagen 38 dann auf derselben oder einer separaten Strecke wieder zum Anfangspunkt zurückgebracht werden. Deshalb ist bei einem Streckenfördersystem mit Kettenantrieb in der Regel eine umlaufende Endloskette vorgesehen, die von einem separaten nicht dargestellten Antriebsmotor angetrieben wird. Die Systemschiene 1 enthält deshalb drei horizontal übereinander angeordnete Führungskanäle 6, 7, 8, wobei in den beiden äußeren Führungskanälen 6, 8 die Antriebskette 5 umläuft.

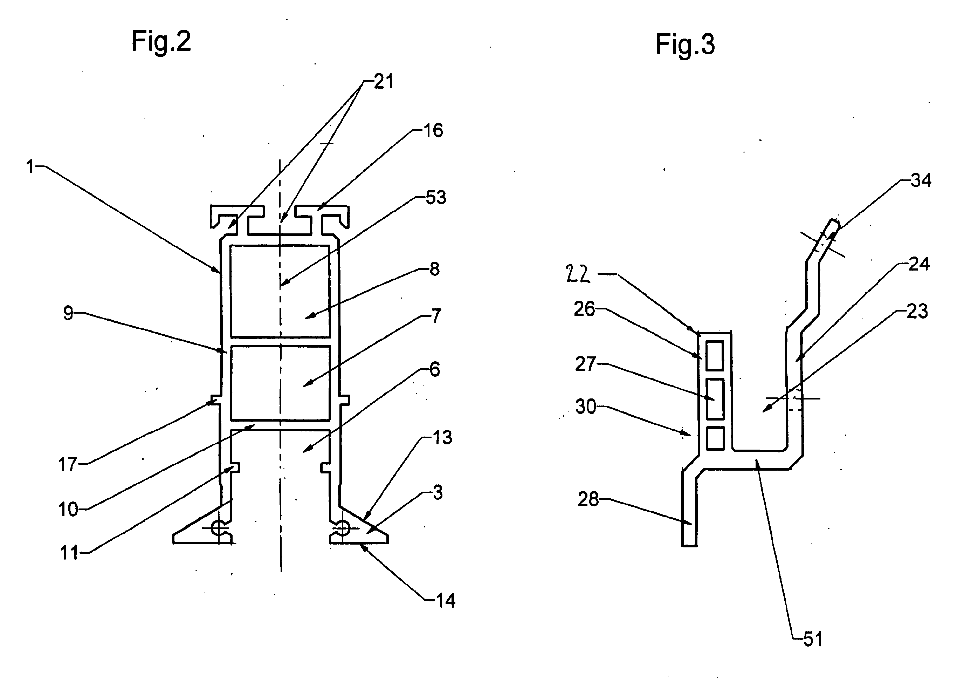

Die spezielle Ausbildung der Systemschiene ist in Fig. 3 der Zeichnung als Querschnitt-Schnittbild näher dargestellt. Dabei ist die Systemschiene 1 in bevorzugter Einbaulage für eine Einschienenhängebahn vertikal angeordnet. Die Laufschiene 1 besteht aus einem Längsprofil, das vorzugsweise aus Aluminium oder Stahl gefertigt wird, aber auch aus einer Aluminium- oder einer Stahllegierung bestehen kann. Das Längsprofil enthält zwei parallele vertikale Seitenwände 9 und drei horizontale Querwände 10, die miteinander drei rechteckige oder quadratische Führungskanäle 6,7, 8 bilden. Der untere Führungskanal 6 ist nach unten offen und enthält an seinen beiden inneren Seitenflächen zwei gegenüber liegende Vorsprünge 11, in die eine untere Kettenführung 12 eingeschoben und dadurch fixiert wird. Die Führungskanäle können zumindest innen auch mit einem runden Querschnitt ausgeführt sein.

An den beiden Seitenwänden 9 des Längsprofils sind als unterer Abschluss zwei gleichartige seitlich auskragende Laufflächenteile 3 angeordnet, die mit ihren Begrenzungsflächen 13,14 vorzugsweise einen Winkel von 30° miteinander bilden. Dabei ist die nach oben gerichtete Lauf- oder Begrenzungsfläche 13 schräg angeordnet, wodurch eine gute Zentrierung des Laufwagenkopfes 2 erreichbar ist. Die untere Begrenzungsfläche 14 ist horizontal und rechtwinklig zu den Seitenflächen 9 ausgerichtet und stellt ebenfalls eine Lauf- oder Führungsfläche 14 dar, um eine bessere Längs- und Vertikalführung der Laufwagenköpfe 2 zu erreichen oder eine stehende Laufwagenförderung zu ermöglichen. Die Systemschiene 1 besitzt vorzugsweise eine Höhe von 120 mm und eine Breite von 50 mm und ist zu einer vertikalen Mittenebene 53 symmetrisch, wobei die auskragenden komplementären Laufflächenteile 3 etwa 15 mm nach außen abstehen. Im oberen Bereich der Systemschiene 1 sind noch zwei T-Träger 16 angeordnet, die mit den Seiten- 9 und Querwänden 10 Längsschlitze 21 bilden, die als Aufnahmemittel zur Befestigung weiterer Anbauteile und gleichzeitig auch zur Aufhängung der Schiene 1 an Gebäudeteilen dienen. Dazu ist noch an den beiden Seitenwänden 9 jeweils ein nach außen gerichteter Längssteg 17 vorgesehen, der ebenfalls ein Aufnahmemittel insbesondere im Zusammenwirken mit den oberen Längsschlitzen 21 bildet.

Zur besseren Führung ist im oberen Führungskanal 8 und im unteren Führungskanal 6 zusätzlich noch eine Kettenführung 12,19 vorzugsweise aus weichem Kunststoffmaterial eingeschoben und dadurch horizontal und vertikal fixiert. Dabei enthält mindestens die untere Kettenführung 12 eine nach unten offene Längsnut 20, durch die ein Antriebsritzel 31 eines Laufwagenkopfes 2 in die Antriebskette 5 eingreifen kann. Der mittleren Führungskanal 7 ist bei dem dargestellten Streckenfördersystem im Längsbereich freigelassen und dient im Wesentlichen zur Beabstandung der beiden linearen Antriebskettenteile 5, die am Anfang und am Ende der Förderstrecke mittels eines nicht dargestellten Umlenkritzels eine Endloskette bilden. Dazu wird am End- oder Anfangsbereich der Förderstrecke jeweils in den mittleren Führungskanal 7 eine nicht dargestellte Kettenspannvorrichtung fixiert, die aus einem Vierkantstab besteht, an dessen äußerem Ende jeweils ein Umlenkritzel drehbar gelagert ist.

Allerdings kann zwischen den beiden Endpunkten der Förderstrecke der mittlere Führungskanal 7 auch durch Vierkantstopfen abgedichtet und vorzugsweise zur Zuführung von pneumatischen Druckmitteln oder zur Aufnahme von Stromversorgungsleitungen genutzt werden. Zum Antrieb der Antriebskette 5 ist an beliebiger Stelle der Förderstrecke noch ein nicht dargestellter Antriebsmotor als Baugruppe vorgesehen, der an den Aufnahmemitteln 16, 17,21 der Systemschiene 1 angeordnet ist. Dieser wird durch eine Klemmverbindung auf den oberen Längsschlitz 21 an der Systemschiene 1 festgeklemmt. Dabei werden noch zwei zusätzlich nicht dargestellte Umlenkritzel als Baugruppe auf den oberen Längsschlitz 21 befestigt, die den oben liegenden Antriebskettenteil 5 auf ein Motorantriebsritzel der Motorbaugruppe umlenken, und eine kraftschlüssige Antriebsverbindung herstellen.

Zur Streckenförderung sind an der Systemschiene 1 unten zwei gleichartige Laufwagenköpfe 2 hängend angeordnet. Diese Laufwagenköpfe 2 stellen ein Einrollen-Laufwagenkopfteil dar, weil sie in Laufrichtung in einer vertikalen Ebene nur eine Laufrolle 25 aufweisen. Derartige Kopfteile 2 sind für geringe Lasten von ca. 100 kg vorgesehen und sehr kostengünstig herstellbar. Diese Grundversion eines Laufwagenkopfes 2 besteht aus einem Längsprofilträger 4, der nebeneinander mindestens drei Längskammern 23,30 aufweist, dabei wird dieser Längsprofilträger 4 vorzugsweise aus zwei komplementären Profilhälften 22 zusammengesetzt, wie sie in Fig. 3 der Zeichnung näher dargestellt sind. Jede Profilhälfte 22 besteht dabei aus strukturierten, im Wesentlichen parallelen Längswänden 24,26 von ca. 100 mm Länge die U-förmig durch eine Verbindungsfläche 51 von ca. 30 mm Breite mit einander verbunden sind und eine Längskammer 23 von ca. 100 mm x 90 mm x 20 mm zur Aufnahme der Laufrollen 25 bilden. Die innere Längswand 26 von ca. 50 mm Höhe ist etwas verkürzt ausgebildet und enthält 3 Längsaussparungen 27, die zur Aufnahme von Lager- oder Freischaltelementen im Stauförderbetrieb dienen. An der inneren Längswand 26 ist noch eine nach innen um ca. 6 mm versetzte und nach unten gerichtete Befestigungsfläche 28 von ca. 30 mm Länge angeordnet, die zur Verbindung zweier komplementärer Profilhälften zu einem Längsprofilträger 4 dient und an der gleichzeitig ein Verbindungselement 29 zu einem Laufwagen 38 oder zu einem Fördergutträger angeordnet ist. Werden zwei derartige komplementäre Profilhälften 22 miteinander verschraubt, so entsteht als Längsprofilträger 4 ein Profilkopfrahmen von ca. 100 mm Länge und ca. 120 mm Breite, der durch die U-förmige Verbindung nach außen zwei Längskammern 23 zur Aufnahme der Laufrollen 25 bildet, und in der Mitte eine mittlere Aufnahmekammer 30 zur Aufnahme der Ankopplungs- oder Antriebselemente aufweist, die vorzugsweise als Antriebsritzel 31 ausgebildet sind.

Bei dem in Fig. 1 der Zeichnung dargestellten Einrollen-Laufwagenkopf 2 ist in der mittleren Aufnahmekammer 30 ein Antriebsritzel 31 angeordnet, das mit einer in den Längsaussparungen 27 angeordneten Freischaltevorrichtung zusammenwirkt. Das Antriebsritzel 31 ist auf einer gemeinsamen Welle 54 mit den beiden unteren Laufrollen 25 drehbar gelagert. Dabei ist die Welle 54 gleichfalls zwischen zwei Betätigungsarmen 47 eines Sperrschiebers 32 hindurchgeführt, die in der mittleren Längsaussparung 27 axial beweglich angeordnet sind. Bei unbetätigtem Sperrschieber 32 wird die Welle 54 des Antriebsritzels 5 durch in nicht dargestellte Vertiefungen eingreifende Kugeln arretiert, so dass bei einer angetriebenen Kette 5 die Zähne des Antriebsritzels 31 in die Kettenglieder des unteren Kettenteils 5 eingreifen und der Laufwagenkopf 2 in Förderrichtung mitgenommen wird. Läuft allerdings der Sperrschieber 32 mit seinen vorderen Quersteg auf einem anderen Laufwagenkopf 2 oder ein anderes Hindernis auf, so bewegt er sich entgegen der Förderrichtung, so dass die nicht dargestellten Kugeln in eine Vertiefung laufen und so das Antriebsritzel 5 freischalten, wodurch der Laufwagenkopf 2 still gesetzt wird. Sobald das Hindernis beseitigt ist, wird der Sperrschieber 32 durch eine nicht dargestellte Rückstellfeder wieder in eine Mittelstellung verschoben, in der die Kugeln das Antriebsritzel 5 wieder arretieren, so dass der Laufwagenkopf 2 wieder weiter befördert wird. Durch den Einbau eines derartigen Sperrschiebers 32 als Freischaltvorrichtung in den Längsprofilträger 4 des Laufwagenkopfs 2 ist das als Streckenfördersystem ausgebildete Fördersystem in ein Staufördersystem erweiterbar. Bei einer vereinfachten Ausführung kann die Freischaltvorrichtung 32 auch entfallen, so dass dann das Antriebsritzel 5 als Ankoppelelement stets arretiert bleibt und der Laufwagenkopf 2 starr mit der Antriebskette 5 verbunden ist und in Förderrichtung bewegt wird. Eine derartige starre Ankopplung ist immer dann ausreichend, wenn bei einer Fliessfertigung ein konstanter Abstand zwischen den Laufwagen 38 einhaltbar ist oder die Geschwindigkeit der Gesamtförderanlage zentral gesteuert wird.

Zur Abstützung des Laufwagenskopfs 2 sind oberhalb der unteren Laufrollen in der gleichen vertikalen Ebene noch zwei gleichartige obere Laufrollen 25 an den äußeren Längswänden 24 befestigt. Diese sind an eine schräge obere Struktur der äußeren Längswände 24 angeschraubt und drehbar gelagert und stehen mit ihren Rollenlaufflächen deshalb eben auf den oberen Laufflächen 13 der Systemschiene 1 auf.

Da dieser dargestellte Einrollen-Laufwagenkopf 2 für einen Laufwagen 38 mit Ladestromversorgung vorgesehen ist, der während einer Fahrzeugmontage in der Fliessfertigung die Fahrzeugbatterie auflädt, sind noch Energieversorgungselemente am Laufwagenkopf 2 und an der Laufschiene 1 vorgesehen. Dazu sind an den äußeren Längswänden 24 des Längsprofilträgers 4 noch Befestigungsmittel in Form von vorbereiteten Bohrungen 34 vorgesehen, an die als Baugruppe ein Stromabnehmermodul 33 angeschraubt ist. Dies greift mit seinen Schleifkontakten in eine Stromzuführungsschiene 35 als weitere Baugruppe ein, die an der Systemschiene 1 befestigt ist. Dazu sind auch an der Systemschiene 1 Aufnahmemittel in Form von Längsstegen 17, T-Träger-Stege 16 und Längsschlitzen 21 vorgesehen, mit deren Hilfe die Stromzuführungsschiene 35 über eine Klemm-, Schnapp- oder Schraubverbindung befestigt wird. Auf der gegenüber liegenden Seitenwand 9 der Systemschiene 1 ist noch ein Stromversorgungsmodul 36 an der Systemschiene 1 auf gleiche Art befestigt, über das die Ladespannung oder eine andere Versorgungsspannung dem Fördersystem zugeführt wird.

Bei einer weiteren besonderen Ausführung des Fördersystems können beide Laufwagenköpfe 2 auch mittels eines Verbindungsprofils, einer Verbindungsstange, einer Verbindungspalette im Bereich der Verbindungselemente 29 miteinander zu einem Doppelkopf-Laufwagen 38 verbunden werden, der dann für Fördersysteme mit längeren Laufwagen, Fördergutträgern oder für schwerere Fördergutarten geeignet ist.

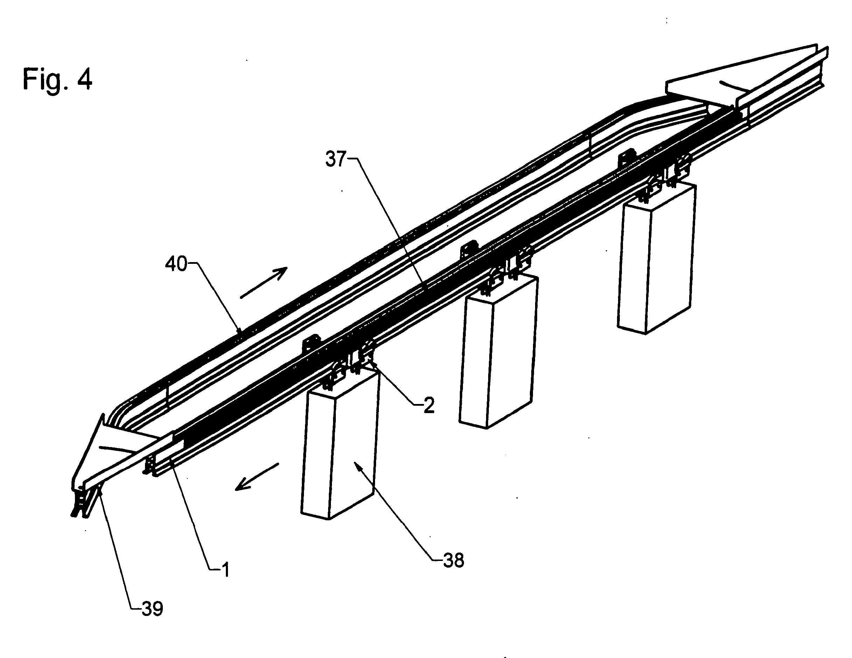

Ein derartiges Streckenfördersystem mit zwei parallel angeordneten Förderstrecken ist in Fig. 4 der Zeichnung schematisch dargestellt. Dabei besteht das Fördersystem aus einer linearen Förderstrecke 37 mit drei hintereinander angeordneten Laufwagen 38, die jeweils einen Doppelkopf-Laufwagen 38 aufweisen. Die drei Laufwagen 38 sind mit ihren beiden Kopfteilen 2 an einer Systemschiene 1 zu einem Hängefördersystem aufgehängt, das gleichzeitig ein Streckenfördersystem darstellt. An den beiden Endpunkten der linearen Förderstrecke 37 ist jeweils eine Weiche 39 angeordnet, mit der die Laufwagen 38 auf die parallele Rückfahrstrecke 40 umgeleitet werden können, um einen kontinuierlichen Förderbetrieb zu gewährleisten. Durch die beiden Weichen 39 ist hier ein kontinuierlicher Förderbetrieb mittels eines umlaufenden Kettenantriebs schwer realisierbar, so dass sich hier ein Schwerkraftfördersystem oder eine Elektrohängebahnsystem anbietet.

Bei einem Schwerkraftfördersystem, wie dargestellt, ist die Systemschiene 1 entsprechend zur horizontalen Schwerkraftlinie geneigt angeordnet, so dass die Laufwagen 38 allein durch die geneigte Förderstrecke 37 angetrieben werden oder zumindest manuell leicht bewegbar sind. Teilweise werden derartige Laufwagen 38 wie beim Aufladevorgang von zu montierenden Kraftfahrzeugen auf einer Fertigungsstrasse auch an diese mittels eines Seils oder anderer Ankoppelelemente angehängt. Nach dem Ladevorgang werden diese Laufwagen 38 mittels einer Weiche 39 auf die Rückfahrstrecke 40 umgeleitet und dann manuell oder durch einen Kettenantrieb wieder zum Bandanfang zurückgezogen, um dann wieder auf die Förderstrecke 37 geführt zu werden. Bei einem derartigen Schwerkraftfördersystem wird die Systemschiene 1 ohne integrierte Antriebskette 5 und ohne eine Kettenführung 12 verwandt, wodurch eine kostengünstige Förderstrecke realisierbar ist. Dabei kann der Laufwagenkopf 2 auch ohne Antriebsritzel 31 und ohne Sperrschiebervorrichtung 32 ausgestattet sein, ohne dass an den Hauptkomponenten des Fördersystems extern etwas verändert werden muss.

Ein derartiges Streckenfördersystem nach Fig. 4 der Zeichnung könnte aber auch als Elektrohängebahnsystem ausgebildet sein, was sich insbesondere bei längeren Förderstrecken 37 und bei hohem Automatisierungsgrad anbietet. Dazu müsste an den Befestigungsmitteln 34 des Laufwagenkopfes 2 lediglich ein Antriebsmotormodul 41 befestigt werden, das dann jeden Laufwagen 38 separat antreibt.

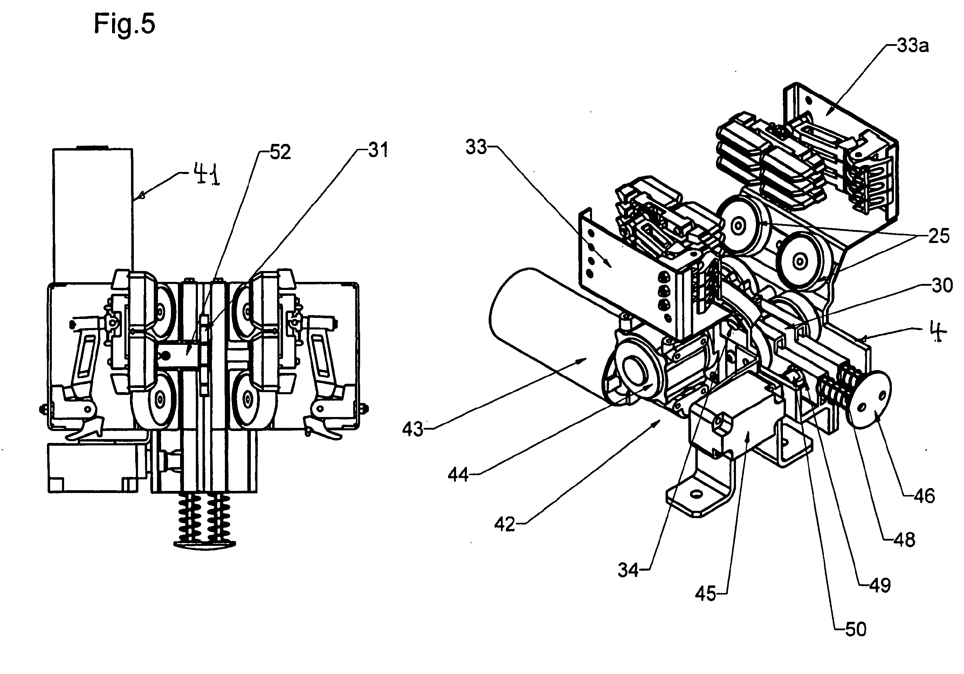

Ein derartiger Laufwagenkopf 2 mit Antriebsmotormodul 41 in Drauf- und Seitenansicht ist in Fig. 5 der Zeichnung näher dargestellt. Dabei handelt es sich um einen Doppelrollenkopf 42 als Laufwagenkopf 2, bei dem in Förderrichtung jeweils zwei Laufrollen 25 hintereinander angeordnet sind, so dass ein derartiger Laufwagenkopf 2 acht Laufrollen 25 aufweist. Dieser Doppelrollenkopf 42 besteht ebenfalls aus einem Längsprofilträger 4, der aus zwei Profilhälften 22 zusammengesetzt ist und dabei in seiner Länge von ca. 200 mm etwa die doppelte Länge aufweist, wie der Längsprofilträger 4 des Einrollen-Laufwagenkopfes 2 nach Fig.1 der Zeichnung, aber ansonsten gleich ausgebildet ist. Das Antriebsmotormodul 41 besteht aus einer Baugruppe mit einem Elektromotor 43 und einem Umlenkgetriebe 44, an dem eine Antriebswelle 52 mit einem Antriebsritzel 31 als Antriebselement befestigt ist. Dabei ist das Antriebsritzel 31 in der mittleren Aufnahmekammer 30 des Längsprofilträgers 4 drehbar gelagert und starr oder mittels einer Kupplung mit der Antriebswelle 52 verbunden. Zur Stromversorgung für den Elektromotor 43 ist an den Befestigungsmitteln 34 des Längsprofilträgers 4 ein Stromabnehmermodul 33 als Baugruppe befestigt, das über Schalt- und Steuermittel 45 elektrisch mit dem Elektromotor 43 verbunden ist. Zur Spannungsversorgung eines Batterieladeteils am Laufwagen 38 ist an den Befestigungsmitteln 34 der gegenüber liegenden Seite des Längsprofilträgers 4 noch ein zweites Stromabnehmermodul 33a als Baugruppe angeordnet.

Zum Betrieb in einem Staufördersystem oder zur Sicherheitsabschaltung enthält der Doppelrollenkopf 42 mit Antriebsmotormodul 41 noch einen Abschaltschieber 46, der wie der Sperrschieber 32 in der Längsaussparung 27 gegen eine Federkraft beweglich geführt ist. Dabei ist an den seitlichen Schieberarmen 48 eine Quernut 49 angeordnet, in die ein Tastelement 50 der Schalt- und Steuermittel 45 eingreift und bei einer Verschiebung des Abschaltschiebers 46 den Elektromotor 43 still setzt. Ein derartiger -Doppelrollenkopf kann auch ohne Antriebsmotormodul 41 vorgesehen werden und ist dann wie der Einrollen-Laufwagenkopf für Kettenantriebe oder Schwerkraftantriebe einsetzbar.

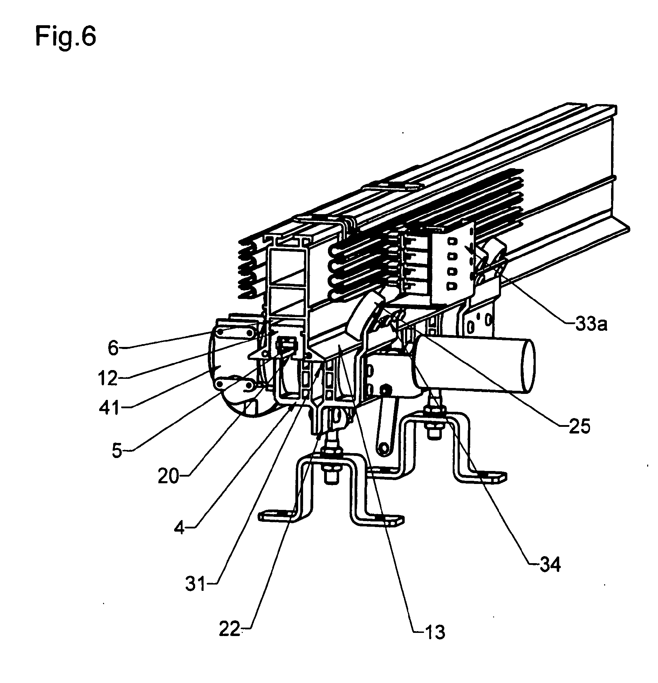

Zum Betrieb als Elektrohängebahnsystem ist der Doppelrollenkopf 42 mit dem Antriebsmotormodul 41 in der Systemschiene 1 zu einem Elektrohängebahnsystem kombiniert, das in Fig. 6 der Zeichnung als Ausschnitt näher dargestellt ist. Dabei läuft der Doppelrollenkopf 42 mit seinen vier oberen Laufrollen 25 auf den beiden oberen schrägen Laufflächen 13 der Systemschiene 1. Als Ankoppelelemente ist im unteren Führungskanal 6 eine fest eingespannte Antriebskette 5 innerhalb der unteren Kettenführung 12 axial und vertikal starr und unbeweglich angeordnet. Das Antriebsritzel 31 als Antriebselement im Doppelrollenkopf 42 greift durch den Längsnut 20 in der unteren Kettenführung 12 in die Antriebskette 5 als Ankoppelelement ein und bewegt den Doppelrollenkopf 42 entsprechend der Ansteuerung des Elektromotors 43 entlang der Systemschiene 1. Ein derartiger Doppelrollenkopf 42 mit Antriebsmotormodul 41 kann auch mit einem nicht angetriebenen Laufwagenkopf 2 über ein Verbindungsprofil zu einem Doppelkopflaufwagen 38 verbunden werden. Bei der Ausgestaltung des Streckenfördersystems nach Fig. 4 der Zeichnung als Elektrohängebahnsystem kann jeder angetriebene Doppelrollenkopf 42 über eine Steuerleitung, die über den Stromabnehmermodul 33 mit dem Antriebsmotormodul 41 verbunden ist, separat oder synchron mit den anderen Laufwagenköpfen 2 gesteuert werden. Insoweit kann jeder Laufwagen 38 bei Erreichen der Weichen 39 still gesetzt und die Weichen 39 selbsttätig mittels eines nicht dargestellten Stellmotors umgelegt und dann das Antriebsmotormodul 41 zum Zurücklauf wieder angesteuert werden. Durch die vorhandenen Abschaltschieber 46 ist das vorbeschriebene
Streckenfördersystem als Hängebahnsystem auch als Staufördersystem zu betreiben, wenn die Laufwagenköpfe 2 unterschiedliche Fördergeschwindigkeiten aufweisen.

Mit der Systemschiene 1 können nicht nur Streckenfördersysteme, sondern auch Kreisfördersysteme aufgebaut werden, bei denen die Laufschienen an ihren Anfangs- und Endpunkten zusammentreffen und somit einen endlosen Schienenkreis bilden. In einem derartigen Kreisfördersystem können sowohl Elektrohängebahn-Laufwagen oder Laufwagen 38 ohne Antriebsmotormodul 41 betrieben werden. Bei einem Kreisfördersystem mit Laufwagenköpfen 2 ohne Antriebsmotormodul 41 wird vorzugsweise ein Kettenantrieb vorgesehen. Dazu ist im unteren Führungskanal 6 der Systemschiene 1 eine Antriebskette 5 angeordnet, die im Schienenkreis eine Endloskette bildet und durch eine oder mehrere nicht dargestellte stationäre Elektromotoren an der Systemschiene 1 angetrieben wird. Dazu werden an den Aufnahmemitteln 21, 17,16 der Systemschiene 1 ein nicht dargestelltes Motormodul als Baugruppe mit zwei in die Schiene eingesetzte Umlenkritzel befestigt, die die Antriebskette 5 als Antriebselement durch den unteren Führungskanal 6 in Förderrichtung ziehen. In diese Antriebskette 5 greifen dann die arretierten Antriebsritzel 31 der Laufwagenköpfe 2 als Ankoppelungselemente ein und werden so entlang der Förderstrecke 37 bewegt. Als Antriebs- oder Ankoppelungselemente können aber auch Zahnriemen oder Zahnstangen eingesetzt werden. Sind die Laufwagenköpfe 2 mit Sperrschiebern 32 ausgestattet, so ist auch ein Staufördersystem in einem Kreisfördersystem möglich.

Da alle Grundausführungen der Systemschiene 1 als auch der Laufwagenköpfe 2 für alle Fördersysteme einsetzbar sind, können vorhandene Fördersysteme auch nachträglich auf andere Fördersystemarten umgestellt werden, ohne dass die Systemschiene 1 oder die Laufwagenköpfe 2, 42 ausgetauscht werden müssten. Denn durch einfache Integration innerhalb der Systemschiene 1 und/oder der Laufwagenköpfe 2,42 oder durch Anbaumodule 41,33 oder Baugruppen sind nachträgliche Fördersystemänderungen auf einfache Weise möglich. So sind auch Kombinationen verschiedener Fördersysteme innerhalb einer Förderstrecke 37 ausführbar, wobei sich ein Schwerkraftfördersystem an ein Streckenfördersystem anschließen kann. Derartige Systemschienen 1 können auch als Bögen und Weichen 39 ausgebildet sein, so dass beliebige Förderstreckennetze ausbildbar sind, die auch größere Höhenunterschiede überwinden können.

Da die Laufwagenköpfe 2,42 vorzugsweise über vertikal angeordnete Laufrollenpaare in einer vertikalen Ebene verfügen, die sich auf beide Laufflächenpaare 13, 14 der Systemschiene 1 abstützen können, sind damit nicht nur Hängebahnsysteme, sondern auch stehende, schienengebundene Flurfördersysteme mit Paletten als Fördergutträger ausführbar. Dabei können die jeweils hängenden oder stehenden Laufrollenpaare auch als Reibrollen ausgebildet sein, so dass auch Elektrobahnsysteme ohne starre Antriebskette 5 oder Zahnstange als Ankoppelelement im unteren Führungskanal 6 ausbildbar sind.

## Patentansprüche

1. Fördersystem mit mindestens einer Laufschiene (1), an der mindestens ein Laufwagen (38) oder ein Fördergutträger längs einer Förderstrecke (37) geführt bewegbar ist und jeder Laufwagen (38) oder Fördergutträger mindestens einen Laufwagenkopf (2) enthält, mit dem er sich auf der Laufschiene (1) abstützt, wobei jeder Laufwagenkopf (2) ein Rahmenteil (4) aufweist, an dem mindestens zwei Laufrollen (25) drehbar befestigt sind, und Antriebselemente (5,31) oder Ankoppelungselemente (5,31) enthält, die mit Antriebselementen (5,31) oder Ankoppelungselementen (5,31)verbindbar sind, wobei die Laufschiene (1) aus mindestens einem Längsprofil besteht, das mindestens zwei seitlich auskragende Laufflächenteile (3) zur Abstützung der Laufrollen (25) enthält und Aufnahmemittel (16,17,21) zur Befestigung von mindestens einer Stromzuführungsschiene (35) aufweist, **dadurch gekennzeichnet, dass** die Laufschiene (1) als Systemschiene (1) für unterschiedliche Laufwagenantriebe ausgebildet ist, die zwei oder drei horizontal übereinander angeordnete quadratische, rechteckige oder runde Führungskanäle (6,7,8) zur Aufnahme von mechanischen Antriebselementen (5,31) oder mechanischen Ankopplungselementen (5) enthält und dass der Rahmenteil als Längsprofilträger (4) mindestens für unterschiedliche Laufwagenantriebe ausgebildet ist, der mindestens zwei äußere Längskammern (23) zur Aufnahme der Laufrollen (25) und mindestens eine mittlere Längskammer (30) zur Aufnahme von mechanischen Ankopplungselementen (31) oder mechanischen Antriebselementen (31) enthält, wobei die mittlere Längskammer (30) dem unteren Führungskanal (6) gegenüberliegend angeordnet ist.

2. Fördersystem nach Anspruch 1, **dadurch gekennzeichnet, dass** die Systemschiene (1) mindestens zwei parallele vertikal angeordnete Seitenwände (9) enthält, die durch mindestens zwei Querwände (10) miteinander verbunden sind und die miteinander mindestens zwei Führungskanäle (6,7,8) bilden.

3. Fördersystem nach Anspruch 1 oder 2, **dadurch gekennzeichnet, dass** an den außen liegenden Seitenwänden (9) der Systemschiene (1) die nach außen gerichteten auskragenden Laufflächenteile (3) gegenüberliegend angeordnet sind, und jeweils eine horizontale (14) und eine schräg zur horizontalen nach außen abfallende Lauffläche (13) aufweisen.

4. Fördersystem nach einem der vorhergehenden Ansprüche, **dadurch gekennzeichnet, dass** die Aufnahmemittel (16,17,21) an der Systemschiene (1) durch Längsstege (16,17) und Längsschlitze (21) an den Seiten- (9) und/oder Querwänden (10) gebildet sind.

5. Fördersystem nach einem der vorhergehenden Ansprüche, **dadurch gekennzeichnet, dass** die Systemschiene (1) so ausgebildet ist, dass in ihr mindestens zwei Führungskanäle (6,7,8) vorgesehen sind, die vorzugsweise einen quadratischen und/oder rechteckigen und/oder einen runden Querschnitt aufweisen, wobei dieser so ausgebildet ist, dass darin Kettenführungen (12) oder andere Führungen einlegbar sind, in denen eine Antriebskette (5), ein Zahnriemen oder eine Zahnstange starr oder umlaufend geführt ist.

6. Fördersystem nach einem der vorhergehenden Ansprüche, **dadurch gekennzeichnet, dass** die Systemschiene (1) ein Längsprofil aufweist, das aus Aluminium, Aluminiumlegierung, Stahl, Stahllegierung oder einem harten Kunststoff besteht.

7. Fördersystem nach einem der vorhergehenden Ansprüche, **dadurch gekennzeichnet, dass** als Antriebsmittel eine beweglich umlaufende Antriebskette (5) oder ein Zahnriemen im unteren Führungskanal (6) oder als Ankoppelmittel eine fest eingespannte Antriebskette (5),ein Zahnriemen oder eine Zahnstange vorgesehen ist.

8. Fördersystem nach einem der vorhergehenden Ansprüche, **dadurch gekennzeichnet, dass** der Längsprofilträger (4) des Laufwagenkopfes (2) mindestens vier weitgehend parallele Längswände (24,26) aufweist, die an einer Seite durch Verbindungsflächen (51) miteinander verbunden sind, wodurch zwischen den Längswänden (24,26) mindestens drei Längskammern (23,30) gebildet werden.

9. Fördersystem nach einem der vorhergehenden Ansprüche, **dadurch gekennzeichnet, dass** in den inneren Längswänden (26) mindestens eine Längsaussparung (27) zur Aufnahme von Lager- oder Freischaltmitteln (47,48) vorgesehen ist.

10. Fördersystem nach einem der vorhergehenden Ansprüche, **dadurch gekennzeichnet, dass** an den beiden äußeren Längswänden (24) des Längsprofilträgers (4) Befestigungsmittel (34) vorgesehen sind, an denen mindestens ein Stromabnehmermodul (33) oder andere Baugruppen anbringbar ist.

11. Fördersystem nach einem der vorhergehenden Ansprüche, **dadurch gekennzeichnet, dass** der Längsprofilträger (4) des Laufwagenkopfes (2) aus zwei komplementären Profilhälften (22) besteht, die im Bereich der inneren Längswand (26) ein Verbindungselement (29) aufweisen, das zur Verbindung der beiden Profilhälften (22) und zur Verbindung mit dem Laufwagen (38) oder einem Fördergutträger dient.

12. Fördersystem nach einem der vorhergehenden Ansprüche, **dadurch gekennzeichnet, dass** in der mittleren Längskammer (30) des Längsprofilträgers (4) ein Antriebsritzel (31) angeordnet ist, das in die Antriebskette (5) im mittleren Führungskanal (6) eingreift und mindestens im arretierten Zustand ein Ankoppelelement darstellt.

13. Fördersystem nach einem der vorhergehenden Ansprüche, **dadurch gekennzeichnet, dass** der Laufwagenkopf (2) vor und/oder hinter dem Längsprofilträger (4) einen Sperrschieber (32) aufweist, dessen Betätigungsarme (47) in den Längsaussparungen (27) gegen eine Federkraft beweglich geführt sind und mit Arretiermitteln an einer Antriebswelle (52) des Ankopplungselementes (31) so zusammenwirken, dass bei einer Verschiebung des Sperrschiebers 32 die Arretierung freigeschaltet wird.

14. Fördersystem nach einem der vorhergehenden Ansprüche, **dadurch gekennzeichnet, dass** an den Befestigungsmitteln 34 des Längsprofilträgers (4) mindestens ein Stromabnehmermodul (33) befestigt ist, der in eine Stromzuführungsschiene (35) an der Seitenwand (9) der Systemschiene (1) längs verschiebbar eingreift.

15. Fördersystem nach einem der vorhergehenden Ansprüche, **dadurch gekennzeichnet, dass** zwei Laufwagenköpfe (2) über eine Verbindungsstange, eine Verbindungsplatte oder ein Verbindungsprofil mit einander verbunden sind und einen Doppelkopf-Laufwagen bilden.

16. Fördersystem nach einem der vorhergehenden Ansprüche, **dadurch gekennzeichnet, dass** der Laufwagenkopf (2) als Einrollen-Laufwagenkopf ausgebildet ist, bei dem an den beiden äußeren Längswänden (24) des Längsprofilträgers (4) in einer vertikalen Ebene mindestens zwei oder vier Laufrollen (25) drehbar gelagert sind, wobei sich mindestens zwei Laufrollen (25) auf den Laufflächen (13,14) der Systemschiene (1) abstützen.

17. Fördersystem nach einem der vorhergehenden Ansprüche 1 bis 15, **dadurch gekennzeichnet, dass** der Laufwagenkopf (2) als Doppelrollenkopf (42) ausgebildet ist, bei den an den beiden Längswänden (24) des Längsprofilträgers (4) in zwei vertikalen Ebenen mindestens vier oder acht Laufrollen (25) drehbar angeordnet sind, wobei sich mindestens vier Laufrollen (25) auf den Laufflächen (13,14) der Systemschiene (1) abstützen.

18. Fördersystem nach Anspruch 17, **dadurch gekennzeichnet, dass** der Döppelrollenkopf (42) als Elektro-Laufwagenkopf ausgebildet ist und mit der Systemschiene (1) ein Elektrobahnsystem darstellt, bei dem an den Befestigungsmitteln (34) des Längsprofilträgers (4) zusätzlich ein Antriebsmotormodul (41) befestigt ist, das eine Antriebswelle (52) mit einem Antriebsritzel (31) enthält, wobei das Antriebsritzel (31) in der mittleren Aufnahmekammer (30) des Längsprofilträgers (4) drehbar gelagert ist und in eine Antriebskette (5), einen Zahnriemen oder eine Zahnstange in dem unteren Führungskanal (6) der Systemschiene (1) eingreift, wobei die Antriebskette (5), der Zahnriemen oder die Zahnstange axial starr befestigt ist und ein Ankoppelelement bildet.

19. Fördersystem nach Anspruch 18, **dadurch gekennzeichnet, dass** dieses als Staufördersystem ausgebildet ist, bei dem vor und/oder hinter den Längsprofilträger (4) ein Abschaltschieber (26) vorgesehen ist, dessen Schieberarme (48) in den Längsaussparungen (27) gegen eine Federkraft beweglich geführt sind und mit einem Tastelement (50) der Schalt- und Steuermittel (45) zusammenwirken, das bei einer Verschiebung der Schieberarme (48) den Elektromotor (43) still setzt.

20. Fördersystem nach einem der vorhergehenden Ansprüche 1 bis 6 und 8 bis 11, **dadurch gekennzeichnet, dass** dieses als Schwerkraftfördersystem ausgebildet ist, bei dem die Systemschiene (1) gegenüber einer horizontalen Schwerkraftlinie geneigt angeordnet ist.

21. Fördersystem nach einem der vorhergehenden Ansprüche 1 bis 17, **dadurch gekennzeichnet, dass** dieses als Streckenfördersystem ausgebildet ist, bei dem die Systemschiene (1) entlang einer Förderstrecke (37) mit einem Anfangspunkt und einem Endpunkt angeordnet ist, wobei in dem unteren Führungskanal (6) und dem oberen Führungskanal (8) der Systemschiene (1) eine endlose Antriebskette (5) oder einen Zahnriemen umläuft, die oder der über zwei in oder an der Systemschiene (1) angeordnete Umlenkritzel umgelenkt wird.

22. Fördersystem nach einem der vorhergehenden Ansprüche 18 und 19, **dadurch gekennzeichnet, dass** dieses als Elektrobahnsystem ausgebildet ist, bei dem die Systemschiene (1) entlang einer Förderstrecke (37) mit einem Anfangs- und Endpunkt angeordnet ist und gleichzeitig ein Streckenfördersystem darstellt, wobei in dem unterem Führungskanal (6) eine Antriebskette (5), eine Zahnstange oder ein Zahnriemen als Ankoppelelement axial starr angeordnet ist, in die das Antriebsritzel (31) als Antriebselement eines Elektro-Laufwagenkopfes drehbar eingreift.

23. Fördersystem nach einem der vorhergehenden Ansprüche 1 bis 20, **dadurch gekennzeichnet, dass** dieses als Kreisfördersystem ausgebildet ist, bei dem die Systemschiene (1) entlang einer endlosen Förderstrecke angeordnet ist, wobei im unteren Führungskanal (6) der Systemschiene (1) eine endlose Antriebskette (5) oder einen Zahnriemen als Antriebselement umläuft oder als Ankoppelelement axial starr in der Systemschiene (1) befestigt ist.

24. Fördersystem nach einem der vorhergehenden Ansprüche, **dadurch gekennzeichnet, dass** dieses als Staufördersystem ausgebildet ist, bei dem auf der Systemschiene (1) Laufwagen(38) oder Fördergutträger mit Laufwagenköpfen (2) mit Sperrschiebern (32) oder Abschaltschiebern (36) vorgesehen sind.

25. Fördersystem nach einem der vorhergehenden Ansprüche 18 und 19, **dadurch gekennzeichnet, dass** dieses als Elektrohängebahnsystem ausgebildet ist, bei dem auf der Systemschiene (1) Laufwagen (38) mit Doppelrollenköpfen (42) vorgesehen sind, die mindestens ein Antriebsmotormodul (41) und mindestens ein Stromabnehmermodul (33) aufweisen, wobei das Stromabnehmermodul (33) in eine Stromführungsschiene (35) an der Systemschiene (1) längs beweglich eingreift.

26. Fördersystem nach einem der vorhergehenden Ansprüche, **dadurch gekennzeichnet, dass** die Laufwagenköpfe (2) in der Systemschiene (1) hängend und/oder stehend angeordnet sind.

## Claims

1. Conveying system with at least one running rail (1) at which at least one trolley (38) or one load carrier is guided movable along a conveyor line (37), each trolley (38) or load carrier having at least one trolley head (2) by means of which it is supported on the running rail (1), each trolley head (2) having a frame section (4) at which at least two rollers (25) are rotatably mounted and which includes drive elements (5, 31) or coupling elements (5, 31) which can be connected to drive elements (5, 31) or coupling elements (5, 31), the running rail (1) being composed of at least one longitudinal section with at least two laterally projecting running surface parts (3) for the support of the rollers (25) and with accommodation means (16, 17, 21) for the fixing of at least one power supply bar (35), **characterized in that** the running rail (1) as system rail (1) is designed for different trolley drives and includes two or three square, rectangular or round guide channels (6, 7, 8) which are arranged horizontally one above the other for the accommodation of mechanical drive elements (5, 31) or mechanical coupling elements (5) and **in that** the frame section is designed as longitudinal sectional beam (4) for at least different trolley drives, the beam including at least two external longitudinal chambers (23) for the accommodation of rollers (25) and at least one central longitudinal chamber (30) for the accommodation of mechanical coupling elements (31) or mechanical drive elements (31), the central longitudinal chamber (30) being arranged opposite to the lower guide channel (6).

2. Conveying system as per claim 1, **characterized in that** the system rail (1) has at least two parallel side walls (9) which are vertically arranged and which are connected to each other by at least two transverse walls (10) and which form at least two guide channels (6, 7, 8).

3. Conveying system as per claims 1 or 2, **characterized in that** the running surface parts (3) of the external walls (9) of the system rail (1) which are projected outward are arranged opposite to each other, having each a horizontal running surface (14) and a running surface (13) which is inclined outward when compared with the horizontal running surface.

4. Conveying system as per one of the previous claims, **characterized in that** the accommodation means (16, 17, 21) at the system rail (1) are formed by longitudinal webs (16, 17) and longitudinal slots (21) at the side walls (9) and/or the transverse walls (10).

5. Conveying system as per one of the previous claims, **characterized in that** the system rail (1) is designed in such a way that it includes at least two guide channels (6, 7 , 8) which preferably have a square and/or a rectangular and/or a round cross section, the latter being designed in such a way that chain guides (12) or other types of guides can be inserted, in which a drive chain (5), a toothed belt or a toothed rack is guided in a rigid way or in a revolving way.

6. Conveying system as per one of the previous claims, **characterized in that** the system rail (1) has a longitudinal section formed of aluminium, aluminium alloy, steel, steel alloy or a rigid plastic material.

7. Conveying system as per one of the previous claims, **characterized in that** a freely revolving drive chain (5) or a toothed belt is provided as drive element in the lower guide channel (6) or a firmly clamped drive chain (5), a toothed belt or a toothed rack is provided as coupling element.

8. Conveying system as per one of the previous claims, **characterized in that** the longitudinal sectional beam (4) of the trolley head (2) has at least four almost parallel walls (24, 26) which are connected on one side by means of connecting surfaces (51), which in this way form at least three longitudinal chambers (23, 30) between the longitudinal walls (24, 26).

9. Conveying system as per one of the previous claims, **characterized in that** at least one longitudinal recess (27) is provided in the inner longitudinal walls (26) for the accommodation of bearing means or unlocking means (47, 48).

10. Conveying system as per one of the previous claims, **characterized in that** fasteners (34) are provided at the two external longitudinal walls (24) of the longitudinal sectional beam (4) to which at least one current collector module (33) can be connected or other assemblies.

11. Conveying system as per one of the previous claims, **characterized in that** the longitudinal sectional beam (4) of the trolley head (2) is composed of two complementary section halves which have a connecting element (29) in the area of the inner longitudinal wall (26) which is used for the connection of the two section halves (22) and for the connection with the trolley (38) or a load carrier.

12. Conveying system as per one of the previous claims, **characterized in that** a drive pinion (31) is arranged in the central longitudinal chamber (30) of the longitudinal sectional beam (4) which engages in the drive chain (5) in the central guide channel (6) and which represents a coupling element, at least when in locked state.

13. Conveying system as per one of the previous claims, **characterized in that** the trolley head (2) has a locking slide (32) in front and/or behind the longitudinal sectional beam (4), the actuation arms (47) of which are freely guided in the longitudinal recesses (27) against a spring force and act together with locking elements at a drive shaft (52) of the coupling element (31) in such a way that the locking is unlocked in case of a shifting of the locking slide (32).

14. Conveying system as per one of the previous claims, **characterized in that** at least one current collector module (33) is fixed at the fasteners (34) of the longitudinal sectional beam (4) which engages in a longitudinally displaceable way in a power supply bar (35) at the lateral wall (9) of the system rail (1).

15. Conveying system as per one of the previous claims, **characterized in that** two trolley heads (2) are connected with each other by means of a connecting rod, a connecting plate or a connecting profile, forming a double head trolley.

16. Conveying system as per one of the previous claims, **characterized in that** the trolley head (2) is designed as single roller trolley head, where on the two external longitudinal walls (24) of the longitudinal sectional beam (4) at least two or four rollers (25) are pivot-mounted in a vertical plane, at least two rollers (25) being supported on the running surfaces (13, 14) of the system rail (1).

17. Conveying system as per one of the previous claims 1 to 15, **characterized in that** the trolley head (2) is designed as double roller trolley head (42), where on the two external longitudinal walls (24) of the longitudinal sectional beam (4) at least four or eight rollers (25) are pivot-mounted in two vertical planes, at least four rollers (25) being supported on the running surfaces (13, 14) of the system rail (1).

18. Conveying system as per claim 17, **characterized in that** the double roller head (42) is designed as electric trolley head forming an electric conveyor system, in which a drive motor module (41) is fixed in addition to the fasteners (34) of the longitudinal sectional beam (4), the module including a drive shaft (52) with a drive pinion (31), the drive pinion (31) being pivot-mounted in the central chamber of accommodation (30) of the longitudinal sectional beam (4) and engaging in a drive chain (5), a toothed belt or a toothed rack in the lower guide channel (6) of the system rail (1), the drive chain (5), the toothed belt or the toothed rack being axially fixed in a rigid way and forming a coupling element.

19. Conveying system as per claim 18, **characterized in that** the system is designed as accumulating conveyor, where a locking slide (26) is provided in front or behind the longitudinal sectional beam (4) the sliding arms (48) of which are guided movably against a spring force and act together with a switch of the switching and control elements (45) which de-energizes the electric motor (43) in case of the shifting of the sliding arms (48).

20. Conveying system as per one of the previous claims 1 to 6 and 8 to 11, **characterized in that** the system is designed as gravity conveying system, where the system rail (1) is arranged in an inclined way when compared with a horizontal gravity line.

21. Conveying system as per one of the previous claims 1 to 17, **characterized in that** the system is designed as in-line material handling system, where the system rail (1) is arranged along a conveyor line (37) with a start point and an end point, an endless drive chain (5) or a toothed belt revolving in the lower guide channel (6) and the upper guide channel (8) of the system rail (1) which is returned by means of two return pinions arranged in or at the system rail (1).

22. Conveying system as per one of the previous claims 18 and 19, **characterized in that** the system is designed as electric conveyor, where the system rail (1) is arranged along a conveyor line (37) with a start point and an end point and represents at the same time an in-line material handling system, a drive chain (5) or a toothed belt or a toothed rack being arranged in an axially fixed way as coupling element in the lower guide channel (6), the drive pinion (31) rotatably engaging in one of these as drive element of an electric trolley head.

23. Conveying system as per one of the previous claims 1 and 20, **characterized in that** the system is designed as endless conveyor system, where the system rail (1) is arranged along an endless conveyor line (37), with an endless drive chain (5) or a toothed belt revolving as drive element in the lower guide channel (6) of the system rail (1) or being fixed in an axially rigid way as coupling element in the system rail (1).

24. Conveying system as per one of the previous claims, **characterized in that** the system is designed as accumulating conveyor, where on the system rail (1), trolleys (38) or load carriers are provided both with trolley heads (2) and with locking slides (32) or stop slides (36).

25. Conveying system as per one of the previous claims 18 and 19, **characterized in that** the system is designed as electric conveyor, where trolleys (38) with double roller heads (42) are provided on the system rail (1) which have at least one drive motor module (41) and at least one current collector module (33), the longitudinal movable current collector module (33) engaging in a power supply bar (35) at the system rail (1).

26. Conveying system as per one of the previous claims, **characterized in that** the trolley heads (2) are arranged in the system rail in a pending or standing way.

## Revendications

1. Système de convoyage équipé d'au moins un rail de roulement(1) sur lequel circule au moins un chariot roulant (38) ou un transporteur de marchandises, mobile et guidé sur une voie de roulage (37), et dont chaque chariot roulant (38) ou transporteur de marchandises comprend au moins une tête de roulement de chariot (2) au moyen de quoi il prend appui sur le rail de roulement (1), où chaque tête de roulement du chariot (2) présente une pièce de châssis (4) où sont fixés pas moins de deux galets de roulement (25) pivotants, et comprenant des éléments d'entraînement (5,31) ou des éléments d'accouplement (5,31) pouvant être connectés à des éléments d'entraînement (5,31) ou des éléments d'accouplement (5,31), le rail de roulement (1) étant constitué par au moins un profilé longitudinal, présentant au moins deux parties latérales saillantes servant de bandes de roulement (3), donnant appui aux galets de roulement (25), et d'éléments receveurs (16,17,21) destinés à la fixation d'au moins une goulotte d'alimentation (35), **caractérisé en ce que** le rail de roulement (1) est configuré comme un rail de roulement système (1) conçu pour différents entraînements de chariots roulants, comprenant non moins de deux ou trois canaux de guidage (6,7,8) horizontaux et superposés, de section carrée, rectangulaire ou circulaire, destinés au montage d'éléments d'entraînement mécaniques (5,31) ou d'éléments d'accouplement (5) mécaniques, et que la pièce de châssis est configurée comme un profil longitudinal porteur (4) destiné au moins pour le montage de différents entraînements de chariots roulants, qui comporte au moins deux logements longitudinaux (23) externes pour recevoir des galets de roulement (25) et au moins un logement longitudinal central (30) destiné au montage des éléments d'accouplement (31) ou des éléments d'entraînement mécaniques (31), le logement longitudinal central (30) et le canal de guidage (6) inférieur étant disposés face à face.

2. Système de convoyage selon la revendication 1, **caractérisé en ce que** le rail de roulement système (1) comporte non moins de deux parois latérales (9) verticales disposées parallèlement, qui sont reliées entre elles par au moins deux parois transversales (10) formant ensemble au moins deux canaux de guidage intégrés (6,7,8).

3. Système de convoyage selon la revendication 1 et 2, **caractérisé en ce que** au droit des parois latérales (9), orientées vers l'extérieur du rail de roulement système (1), les bandes de roulement (3) en saillie latérale sont disposées face à face, et forment respectivement une surface de roulement horizontale (14) et une surface de roulement (13) inclinée vers l'extérieur, en dévers par rapport à la surface horizontale.

4. Système de convoyage selon l'une des revendications précédentes, **caractérisé en ce que** les moyens receveurs (16,17,21) du rail de roulement système (1) sont formés par des rails en saillie longitudinaux (16,17) et des rainures longitudinales (21) dans les parois latérales (9) et/ou transversales (10).

5. Système de convoyage selon l'une des revendications précédentes, **caractérisé en ce que** le rail de roulement système (1) est configuré de manière à ce qu'y soient prévus au moins deux canaux de guidage, au moins, présentant de préférence une section carrée et/ou rectangulaire et/ou circulaire, de façon à ce que des entrainements par des chaînes (12) ou autres guidages puissent y être intégrés, afin d'y faire loger une chaîne d'entraînement (5), une courroie dentée ou une crémaillère de fonctionnement rigide ou à mouvement en boucle.

6. Système de convoyage selon l'une des revendications précédentes, **caractérisé en ce que** le rail de roulement système (1) présente un profil longitudinal réalisé en aluminium, alliage d'aluminium, acier, alliage d'acier ou une matière synthétique dure.

7. Système de convoyage selon l'une des revendications précédentes, **caractérisé en ce que** en qualité de moyen d'entraînement est prévue soit une chaîne d'entraînement (5) mobile, circulant en boucle, ou une courroie dentée dans le canal de guidage inférieur (6) soit, en qualité de moyen d'accouplement fixe, une chaîne d'entraînement (5), une courroie dentée ou une crémaillère.

8. Système de convoyage selon l'une des revendications précédentes, **caractérisé en ce que** le profilé longitudinal porteur (4) de la tête du chariot de roulement (2) présente au moins quatre parois longitudinales quasiment parallèles (24,26) qui sont reliées ensemble d'un côté par des parois servant de diaphragmes séparateurs (51), d'où résultent au moins trois chambres longitudinales (23,30) formées entre les parois longitudinales (24,26).

9. Système de convoyage selon l'une des revendications précédentes, **caractérisé en ce qu'**au moins une réservation longitudinal (27) est prévue au droit des deux parois longitudinales internes (26) pour loger les dispositifs de paliers de roulement ou de débrayage (47,48).

10. Système de convoyage selon l'une des revendications précédentes **caractérisé en ce que** des moyens de fixation (34) pouvant recevoir au moins un module de prise de puissance (33) sont prévus au droit des deux parois longitudinales extérieures (24) du profil porteur longitudinal(4)

11. Système de convoyage selon l'une des revendications précédentes, **caractérisé en ce que** le profil porteur longitudinal (4) de la tête du chariot de roulement (2) est constitué de deux moitiés de profilé longitudinal (22) complémentaires qui présentent, dans la zone de la paroi longitudinale interne, un élément de liaison (29) permettant de liaisonner les deux moitiés de profilé (22), ainsi que de réaliser la liaison avec le chariot de roulement (38) ou un support de marchandise à transporter.

12. Système de convoyage selon l'une des revendications précédentes, **caractérisé en ce que** dans la chambre longitudinale centrale (30) du profil longitudinal porteur (4) est disposé un pignon d'entraînement (31) qui s'engrène avec la chaîne d'entraînement (5) dans le canal de guidage central (6) et forme au moins un élément d'accouplement à l'état d'arrêt.

13. Système de convoyage selon l'une des revendications précédentes, **caractérisé en ce que** la tête du chariot de roulement (2) devant et/ou derrière le profil longitudinal porteur (4) présente une tige de verrou (32), le mouvement des bras les actionnant (47) agissent dans les réservations longitudinales (27) contre la force d'un ressort et, conjointement avec les moyens d'arrêt au droit d'un arbre d'entraînement (52) de l'élément d'accouplement (31), agissent de manière à débrayer et mettre au point neutre le dispositif d'arrêt lors du déplacement de le tige de verrou.

14. Système de convoyage selon l'une des revendications précédentes, **caractérisé en ce que**, au droit des moyens de fixation (34) du profil longitudinal porteur (4) est fixé au moins un module de prise de puissance (33) qui intervient dans une goulotte d'alimentation électrique (35) au droit de la paroi latérale (9) du rail de roulement système (1) par translation longitudinale.

15. Système de convoyage selon l'une des revendications précédentes, **caractérisé en ce que** deux têtes du chariot de roulement (2) sont rejointes entre elles par une tige de raccordement, par une platine de jonction ou un profilé de jonction et forment ainsi un chariot de roulement à double tête.

16. Système de convoyage selon l'une des revendications précédentes, **caractérisé en ce que** la tête du chariot de roulement (2) est configurée en tant que tête de chariot roulant à galet unique, où, au droit de l'une des deux parois latérales externes (24) du profil longitudinal porteur (4), dans un plan vertical, sont logés au moins deux ou quatre galets de roulement (25) pivotants, dont deux galets de rotation (25) au moins s'appuient sur les surfaces de roulement (13,14) du rail de roulement (1).

17. Système de convoyage selon l'une des revendications précédentes, **caractérisé en ce que** la tête du chariot de roulement (2) est configurée en tant que double tête de roulement (42)où, au droit des deux parois longitudinales (24) du profil longitudinal porteur (4), sont disposés, dans deux plans verticaux, au moins quatre ou huit galets de roulement (25) pivotants, au moins quatre des galets de roulement (25) prenant appui sur les surfaces de roulement (13,14) du rail de roulement (1).

18. Système de convoyage selon la revendication 17, **caractérisé en ce que** la double tête de roulement du chariot (42) est configuré en tant que tête de roulement électrique, formant avec le rail de roulement système (1) un système de voie électrifiée auquel, aux moyens de fixation (34) du profil longitudinal porteur (4) est fixé en complément un module de moteur d'entraînement (41) comprenant un arbre d'entraînement (52) doté d'un pignon d'entraînement (31), dans lequel le pignon d'entraînement (31) pivotant est logé dans la chambre réceptrice (30) centrale du profil longitudinal porteur (4) et intervient au moyen d'une chaîne d'entraînement (5), d'une courroie dentée ou d'une crémaillère dans le canal de guidage inférieur (6) du rail de roulement système (1), et où la chaîne d'entraînement (5), la courroie dentée ou la crémaillère, fixes, sont montées axialement, formant ainsi un élément d'accouplement.

19. Système de convoyage selon la revendication 18, **caractérisé en ce que** celui-ci est conçu en tant que système de convoyage d'engorgement, prévoyant en amont et/ou en aval du profil longitudinal porteur (4) une targette de coupure (26) dont les bras coulissants (48) accomplissent, dans les réservations longitudinales (27), un mouvement agissant contre la force d'un ressort et permettent, lors du déplacement des bras de glissière (48), de mettre le moteur électrique (43) hors circuit, au moyen d'un élément palpeur (50) du dispositif de commande et de commutation (45) .

20. Système de convoyage selon l'une des revendications de 1 à 6 et de 8 à 11, **caractérisé en ce que** celui-ci est configuré comme un système de convoyage par gravité, dont le rail de roulement système (1) est disposé en inclinaison par rapport à une ligne de gravité horizontale.

21. Système de convoyage selon l'une des revendications précédentes de 1 à 17, **caractérisé en ce que** celui-ci est configuré comme un système de convoyage par tronçon, où le rail de roulement système (1) est disposé le long d'une voie de convoyage (37) dotée d'un point initial et d'un point final, où, dans le canal de guidage inférieur (6) et dans le canal de guidage supérieur (8) du rail de système (1), circule une chaine d'entraînement sans fin ou un courroie dentée, pouvant être dévoyés au moyen de rainures de dévoiement pratiquées soit dans le rail système, soit latéralement à celui-ci.

22. Système de convoyage selon l'une des revendications précédentes 18 et 19, **caractérisé en ce que** celui-ci est conçu comme un système de convoyage par voie électrifiée présentant un rail de roulement de système (1) disposé le long d'une voie de transport (37), dotée d'un point initial et d'un point final et représentant simultanément un système de convoyage par tronçon, équipé d'une chaîne d'entraînement fixe(5) ou d'une crémaillère fixe, ou une courroie dentée fixe, disposées axialement en qualité d'élément d'accouplement, dans lequel un pignon d'entraînement pivotant (31) s'engrène en qualité d'élément d'entraînement d'une tête de chariot roulant électrique.

23. Système de convoyage selon l'une des revendications précédentes 1 à 20, **caractérisé en ce que** celui-ci est conçu comme un système de convoyage en boucle, où le rail de roulement système (1) est disposé le long d'une voie de convoyage, où une chaîne d'entrainement sans fin, ou une courroie dentée, soit circulent axialement en tant qu'élément d'entraînement, soit sont disposées en tant qu'éléments d'accouplement fixes dans le canal de guidage intérieur (6) du rail de roulement système (1)

24. Système de convoyage selon l'une des revendications précédentes, **caractérisé en ce que** celui-ci étant conçu comme un système de convoyage d'engorgement, où le déplacement d'un chariot de roulement (38) ou d'un support de matière à transporter, dotés de têtes de chariot de roulement (2) avec tiges de poussée (32) ou tiges de commutation (36), sont prévus sur la surface du rail système (1).

25. Système de convoyage selon l'une des revendications précédentes 18 et 19, **caractérisé en ce que** celui-ci est conçu en tant que système convoyeur suspendu électrique, dont le rail de roulement (1) permet la circulation longitudinale de chariots de roulement (38) à têtes à galets doubles (42) qui présentent au moins un module motorisé d'entraînement (41) et non moins d'un module de prise de puissance (33), où le module de prise de puissance (33) s'engrène gans un mouvement longitudinal dans une goulotte d'alimentation électrique intégrée (35) au rail de système.

26. Système de convoyage selon l'une des revendications précédentes, **caractérisé en ce que** les têtes de chariot roulant (2) dans le rail de système (1) sont disposées soit en suspension soit en appui.
